# EUROPÄISCHE PATENTSCHRIFT

(11) **EP 2 569 180 B1**
(45) Veröffentlichungstag und Bekanntmachung des Hinweises auf die Patenterteilung: **13.04.2016**
(21) Anmeldenummer: 11715707.3
(22) Anmeldetag: 21.04.2011
(51) Int. Cl.: B60K 20/04

(54) **MODULARE BETÄTIGUNGSEINRICHTUNG FÜR FAHRZEUGGETRIEBE**
MODULAR ACTUATOR FOR VEHICLE TRANSMISSION
DISPOSITIF D'ACTIONNEMENT MODULAIRE POUR BOÎTE DE VITESSES DE VÉHICULE

(30) Priorität: 12.05.2010 DE 102010028965
(43) Veröffentlichungstag der Anmeldung: 20.03.2013
(73) Patentinhaber: ZF Friedrichshafen AG, 88038 Friedrichshafen (DE)
(72) Erfinder: GIEFER, Andreas, 49448 Lemfoerde (DE); RAKE, Ludger, 49439 Steinfeld (DE)
(86) Internationale Anmeldenummer: PCT/EP2011/056403
(87) Internationale Veröffentlichungsnummer: WO 2011/141285

(56) Entgegenhaltungen:
- DE-A1- 4 115 835
- DE-A1-102007 005 496
- FR-A1- 2 863 555
- JP-A- H08 192 651
- JP-A- 2000 326 743
- JP-U- H0 398 132

## Beschreibung

Die Erfindung betrifft eine Betätigungseinrichtung insbesondere für die Auswahl von Übersetzungsstufen eines Fahrzeuggetriebes, nach dem Oberbegriff von Patentanspruch 1.

Eine solche Betätigungseinrichtung ist beispielsweise aus der Druckschrift JP H03-98132 U bekannt.

Die Dokumente JP 2000-326743 A und JP H08 192651 A offenbaren jeweils eine Betätigungseinrichtung mit einem Hebelgehäuse, einen entlang zumindest einer Schaltgasse und zwischen zumindest zwei Schaltpositionen um eine in dem Hebelgehäuse festgelegte Wählhebellagerung schwenkbaren Wählhebel mit einem Schaltknauf zur Betätigung des Wählhebels sowie eine Übertragungseinrichtung zur Übertragung von Schaltbefehlen an das Gangwechselgetriebe.

Das Dokument DE 41 15 835 A1 offenbart eine an eine Fahrzeugsitz zwangsgekoppelte Betätigungseinrichtung, wobei eine Verstellung des Fahrzeugsitzes gleichzeitig eine Positionsänderung eines Schalthebels der Betätigungseinrichtung bewirkt.

Die Auswahl von Übersetzungsstufen bzw. die Steuerung von Schaltprogrammen bei einem Kraftfahrzeuggetriebe erfolgt üblicherweise mittels einer im Griffbereich des Fahrers angeordneten Betätigungseinrichtung. Regelmäßig kommen hierzu Betätigungselemente wie Schalthebel oder Wählhebel zum Einsatz, die beispielsweise zwischen den Frontsitzen des Kraftfahrzeugs oder in anderen Bereichen des Fahrzeuginnenraums angeordnet sind.

Dabei werden derartige Schaltbetätigungseinrichtungen zumeist speziell für einen bestimmten Fahrzeugtyp entwickelt. Dies hängt damit zusammen, dass sich die Anforderungen bezüglich der Erreichbarkeit und Ergonomie der Betätigungseinrichtung sowie bezüglich der konstruktiven Randbedingungen des Einbaus bei den unterschiedlichen Fahrzeugtypen zumeist jedenfalls soweit unterscheiden, dass die Verwendung einer konstruktiv einheitlich gestalteten Betätigungseinrichtung bei verschiedenen Fahrzeugtypen im allgemeinen nicht möglich ist.

Diese Problematik bezüglich der erforderlichen konstruktiven Vielfalt von Betätigungseinrichtungen wird zusätzlich noch dadurch verstärkt, dass sich selbst innerhalb von Fahrzeugbaureihen zunehmend unterschiedliche Fahrzeugtypen herausbilden (wie beispielsweise Limousine, Kompakt-SUV usw.), die auf ein und derselben Plattform (Chassis) basieren, bei denen jeweils unterschiedliche Anforderungen bezüglich der Positionierung der sog. Ergonomiepunkte für den Schaltknauf (vertikale und/oder entlang der Fahrtrichtung horizontale Schaltknaufposition) bestehen können.

Hierbei reicht eine einfache Verlängerung bzw. Verkürzung des Wählhebels zur Erreichung beispielsweise des gewünschten vertikalen Ergonomiepunkts - bereits aus Gründen der begrenzten Festigkeit der Bauteile der Betätigungseinrichtung - oft nicht aus. Zudem ergeben sich bei einer Veränderung der Wählhebellänge jeweils auch proportionale Veränderungen beim Wählhebelweg bzw. bei den Abständen zwischen den einzelnen Schaltpositionen, die jedoch ggf. unerwünscht sind.

Die aus dem Stand der Technik bekannten Betätigungseinrichtungen bieten bei der Montage im Fahrzeug ferner nicht immer die erforderliche Flexibilität insbesondere bezüglich der Montagereihenfolge. Vor allem bei Betätigungseinrichtungen, bei denen noch eine mechanische Verbindung zwischen dem Fahrzeuggetriebe und dem Schalt- bzw. Wählhebel besteht, beispielsweise zur mechanischen Betätigung der Parksperre, ist es häufig erforderlich, dass Teile der Betätigungseinrichtung die Begrenzung des Fahrzeuginnenraums durchragen, da die mechanische Verbindung zum Getriebe in solchen Fällen häufig unter dem Fahrzeugboden in Form einer Unterflurmontage verlegt wird.

Bekannte Betätigungseinrichtungen müssen daher entweder vor der eigentlichen Montage des Fahrzeuginterieurs installiert werden (was die spätere Interieurmontage beeinträchtigen kann), oder sie werden erst bei der Interieurmontage installiert (wobei potenziell aufwändige nachträgliche Unterflurmontage anfallen kann). Die Betätigungseinrichtungen bestehen dabei aus mehreren vorgefertigten Baugruppen (Modulen), wie Wählhebel, Hebelgehäuse, Übertragungseinrichtung und Rastierung bzw. Rastierungseinsatz. Es ergibt sich somit ein modularer Aufbau der Betätigungseinrichtung.

Mit diesem Hintergrund ist es Aufgabe der vorliegenden Erfindung, eine Betätigungseinrichtung - insbesondere für Fahrzeuggetriebe - zu schaffen, mit der sich die genannten Nachteile des Standes der Technik überwinden lassen. Die Betätigungseinrichtung soll dabei insbesondere für eine Vielzahl von Fahrzeugtypen einsetzbar sein, ohne dass für jeden Fahrzeugtyp eine Neuentwicklung oder umfangreiche Änderungskonstruktion der Betätigungseinrichtung erforderlich wird. Dabei sollen auf konstruktiv einfache Weise sowohl ergonomische Anforderungen insbesondere bezüglich der Positionierung des Schaltknaufs, als auch variierende Anforderungen bezüglich Montage und Montagereihenfolge der Betätigungseinrichtung erfüllt werden können

Diese Aufgabe wird durch eine Betätigungseinrichtung mit den Merkmalen des Patentanspruchs 1 gelöst.

Bevorzugte Ausführungsformen sind Gegenstand der Unteransprüche.

In für sich genommen zunächst bekannter Weise dient die Betätigungseinrichtung gemäß der vorliegenden Erfindung insbesondere zur Auswahl von Schaltstufen eines Gangwechselgetriebes, und umfasst hierzu einen zwischen zumindest zwei Schaltpositionen entlang zumindest einer Schaltgasse bewegbaren Wählhebel, sowie ein Hebelgehäuse, in welchem der Wählhebel, um eine im Hebelgehäuse angeordnete Wählhebellagerung schwenkbar, beweglich gelagert ist. Die Betätigungseinrichtung umfasst ferner eine Übertragungseinrichtung für die Übertragung der Schaltbefehle an das Fahrzeuggetriebe.

Des Weiteren weist die Betätigungseinrichtung einen zwischen den beiden Baugruppen "Hebelgehäuse" und "Übertragungseinrichtung" angeordneten Moduladapter auf. Der Moduladapter unterscheidet sich von dem vorbekannten dadurch, dass der Moduladapter mit einer vorbestimmten Winkelgröße zwischen den Anschlussflächen des Moduladapters zum Hebelgehäuse bzw. zur Übertragungseinrichtung für die Anpassung des Ergonomiepunkts in der horizontalen und/oder vertikalen Richtung bereitgestellt ist. Dadurch lässt sich die Betätigungseinrichtung - mittels Auswahl eines bestimmten Moduladapters aus einer Mehrzahl von bereitstellbaren Moduladaptern - an unterschiedliche Randbedingungen, beispielsweise unterschiedliche Einbausituation mit unterschiedlichen ergonomischen Anforderungen anpassen. Insbesondere kann mittels Auswahl eines bestimmten Moduladapters der Ergonomiepunkt der Betätigungseinrichtung, sprich die Position des Schaltknaufs in vertikaler und/oder horizontaler Richtung, in der jeweils gewünschten Weise an die Einbau-Randbedingungen beispielsweise eines bestimmten Fahrzeugtyps angepasst werden.

Mit anderen Worten bedeutet dies, dass die Betätigungseinrichtung modular in eine hebelseitige, vorfertigbare Baugruppe mit dem Hebelgehäuse und dem darin gelagertem Wählhebel einerseits, und in eine übertragungsseitige, ebenfalls vorfertigbare Baugruppe in Form der Übertragungseinrichtung für die Übertragung der Schaltbefehle an das Getriebe andererseits aufgeteilt ist. Dabei ist zwischen der hebelseitigen Baugruppe und der übertragungsseitigen Baugruppe ein keilförmiger Moduladapter bzw. Adapter angeordnet. Der Moduladapter verbindet somit die Module "Hebelgehäuse" und "Übertragungseinrichtung" der Betätigungseinrichtung - in der gewünschten variablen Weise - miteinander.

Somit kann mittels der Bereitstellung, Auswahl und Montage eines Moduladapters mit bestimmten Abmaßen eine Vielzahl von Betätigungseinrichtungen mit unterschiedlichsten Ergonomiepunkten, also vertikalen und/oder (in Fahrtrichtung) horizontalen Positionen des Schaltknaufs dargestellt werden, ohne dass jeweils eine Neu- bzw. Umkonstruktion der gesamten Betätigungseinrichtung erforderlich wird.

Mit der Erfindung kann somit für unterschiedlichste Fahrzeugtypen jeweils die passende Betätigungseinrichtung zur Verfügung gestellt werden, wobei insbesondere der sog. Ergonomiepunkt, also die vertikale und/oder horizontale Position des Schaltknaufs im Innenraum des Fahrzeugs, an das jeweilige Fahrzeugpackage, beispielsweise an die Lage und Position der Fahrzeugsitze angepasst werden kann. Durch die modulare Bauweise, bei der zur Anpassung an einen neuen oder zusätzlichen Fahrzeugtyp lediglich der Moduladapter geändert bzw. ausgetauscht werden muss, ergeben sich somit erhebliche Vereinfachungen und Kostenersparnisse bei Konstruktion, Produktion und Montage der Betätigungseinrichtung.

Generell wird die Erfindung unabhängig davon verwirklicht, wie der Moduladapter konstruktiv ausgebildet ist, solange die Funktion der modular variablen Kopplung zwischen Hebelgehäuse und Übertragungseinrichtung mittels des Moduladapters erfüllt wird.

Bevorzugte Ausführungsformen der Erfindung sehen jedoch vor, dass Moduladapter mit unterschiedlichen Dicken- bzw. Höhenabmessungen zur Anpassung des Ergonomiepunkts der Betätigungseinrichtung in der vertikalen Richtung bereitgestellt werden. Dadurch kann ein Moduladapter mit einer vorbestimmten Dicken- bzw. Höhenabmessung zur Anpassung des Ergonomiepunkts für die Betätigungseinrichtung bereitgestellt werden.

Auf diese Weise lässt sich - durch Auswahl und Montage eines passenden Moduladapters - sowohl die vertikale Position des Ergonomiepunkts (also des Schaltknaufs) als auch die horizontale Position des Ergonomiepunkts (bzw. der Neigungswinkel des Wählhebels in dessen Ausgangslage) in weiten Grenzen variabel festlegen, wodurch der Ergonomiepunkt bzw. die Position des Schaltknaufs insgesamt an unterschiedlichste Einbausituationen und Randbedingungen angepasst werden kann.

Dabei kann der Moduladapter einerseits als separates Bauteil vorgesehen sein. Andererseits ist es jedoch auch denkbar und gemäß einer weiteren Ausführungsform der Erfindung vorgesehen, dass der Moduladapter einstückig entweder an das Hebelgehäuse oder an das Gehäuse der Übertragungseinrichtung angeformt ist. Dies kann beispielsweise dadurch erfolgen, dass zur Herstellung des Hebelgehäuses bzw. des Gehäuses der Übertragungseinrichtung (in diesem Fall mit wahlweise jeweils angeformtem Moduladapter) ein Werkzeug mit Wechseleinsatz verwendet wird, welches - je nach Wechseleinsatz - ein Hebelgehäuse bzw. Übertragungseinrichtungsgehäuse mit jeweils dem gewünschten angeformtem Moduladapter erzeugt. Somit lassen sich auch bei dieser Ausführungsform mit minimalem konstruktivem und Herstellungsaufwand eine Vielzahl unterschiedlicher Betätigungseinrichtungen mit jeweils an unterschiedliche Randbedingungen angepasstem Ergonomiepunkt bereitstellen.

Mit dem Hintergrund einer noch größeren Variabilität der erfindungsgemäßen Betätigungseinrichtung ist gemäß einer weiteren, besonders bevorzugten Ausführungsform der Erfindung ferner vorgesehen, dass - insbesondere zur Anpassung der Betätigungseinrichtung an unterschiedliche Moduladapter - ein an die jeweiligen Fahrzeugrandbedingungen angepasster Wählhebel bereitgestellt und ausgewählt wird, wobei hierzu Wählhebel mit unterschiedlichen Längenabmessungen vorgesehen sind und bereitgestellt werden können. Durch Verwendung eines derartig modular austauschbaren Wählhebels mit unterschiedlichen Längenabmessungen - insbesondere in Abhängigkeit vom gewählten Moduladapter - lässt sich einerseits der Eingriff des übertragungsseitigen Endes des Wählhebels in die Übertragungseinrichtung sicherstellen. Andererseits lassen sich durch geeignete Kombination von Moduladapter und Wählhebellänge die jeweils gewünschten Schaltwege bzw. Abstände der Schaltpositionen am Schaltknauf realisieren, und zwar auch unabhängig vom gewählten Ergonomiepunkt, also von der tatsächlichen vertikalen und/oder horizontalen Position des Schaltknaufs.

Durch die Kombination der Auswahl von Moduladapter und jeweils passendem Wählhebel lassen sich mit anderen Worten sowohl die vertikale und horizontale Position des Schaltknaufs, die Winkellage des Wählhebels, als auch die Schaltabstände am Schaltknauf jeweils weitestgehend unabhängig voneinander verändern und an die Einbau-Randbedingungen des jeweiligen Fahrzeugtyps in weiten Bereichen anpassen.

Dies gilt zunächst einmal unabhängig davon, wie eine etwa vorhandene Wählhebelrastierung konstruktiv realisiert ist. So kann die Wählhebelrastierung auch in der Übertragungseinrichtung, beispielsweise durch eine geeignete Aktuatorik oder durch entsprechende Rastvertiefungen, realisiert werden. Gemäß einer weiteren bevorzugten Ausführungsform der Erfindung umfasst die Betätigungseinrichtung jedoch zudem einen modular austauschbaren Rastierungseinsatz zur Anpassung der Betätigungseinrichtung an unterschiedliche Anforderungen bezüglich der Wählhebelrastierung.

Auf diese Weise lässt sich zusätzlich auch die Wählhebelrastierung, sowohl bezüglich der Rastierungsabstände als auch bezüglich der Anzahl der Rastierungspositionen, an die Anforderungen des jeweiligen Fahrzeugtyps und des jeweiligen Innenraumpackage anpassen. Insgesamt ergibt sich damit eine noch größere Variabilität der erfindungsgemäßen Betätigungseinrichtung.

In ähnlicher Weise sieht eine weitere Ausführungsform der Erfindung vor, dass die Betätigungseinrichtung eine modular austauschbare Schaltkulisse zur Anpassung der Betätigungseinrichtung an unterschiedliche Schaltschemata aufweist. Insgesamt wird so eine nahezu komplett modular aufgebaute Betätigungseinrichtung erhalten, die sich - lediglich durch Austausch einzelner Module - an unterschiedlichste Anforderungen anpassen lässt.

Die Erfindung wird ferner unabhängig davon verwirklicht, wie die Übertragungseinrichtung konstruktiv ausgebildet ist. Mit dem Hintergrund einer zumindest teilweise mechanischen Verbindung zwischen Betätigungseinrichtung und Fahrzeuggetriebe, insbesondere zur mechanischen Betätigung der Parksperre, ist gemäß einer weiteren bevorzugten Ausführungsform der Erfindung jedoch vorgesehen, dass die Übertragungseinrichtung eine Schlitteneinrichtung umfasst.

Mittels der Schlitteneinrichtung lässt sich die Schwenkbewegung des Schalt- bzw. Wählhebels auf einfache Weise in eine lineare Bewegung umwandeln, beispielsweise zur Betätigung eines Gestänges oder Seilzugs, welcher die Betätigungseinrichtung mit dem Fahrzeuggetriebe verbindet. Ferner lassen sich in die Schlitteneinrichtung zusätzliche Funktionalitäten der Betätigungseinrichtung integrieren, insbesondere elektromechanische Sperren oder auch Aktuatoren zur Veränderung, Begrenzung oder Sperrung des Schaltwegs der Betätigungseinrichtung.

Mit diesem Hintergrund ist gemäß einer weiteren bevorzugten Ausführungsform der Erfindung vorgesehen, dass die Übertragungseinrichtung die Schaltelektronik und/oder die Schaltelektromechanik der Betätigungseinrichtung umfasst. Auf diese Weise lassen sich die meisten Kernfunktionen der Betätigungseinrichtung in der Übertragungseinrichtung konzentrieren und zusammenfassen. Dies bedeutet, dass insbesondere das Schiebersystem zum Eingriff mit dem Wählhebel, der Anschluss für den Seilzug, die Wählhebelelektronik und etwaige elektromechanische Sperren bzw. Aktuatoren komplett in einer kompakten Einheit in Form der Übertragungseinrichtung vorliegen. Dabei bleibt die Übertragungseinrichtung als Einheit weitestgehend unabhängig vom jeweiligen Fahrzeugtyp unverändert bestehen, während die Anpassung an das jeweilige Fahrzeug nun lediglich mittels des Moduladapters und ggf. mittels des zusätzlich austauschbaren Rastierungseinsatzes und/oder Auswahl der passenden Wählhebellänge erfolgen kann.

Auf diese Weise wird es insbesondere auch möglich, die Übertragungseinrichtung mit allen darin integrierten Funktionen der Betätigungseinrichtung - ebenso wie den kompletten Seilzug zum Getriebe und den elektrischen Anschluss der Übertragungseinrichtung - vollkommen unabhängig vom Hebelgehäuse und vom eigentlichen Wählhebel bereits vorab im Fahrzeug zu montieren. Moduladapter,

Hebelgehäuse und Wählhebel können sodann zu einem späteren Zeitpunkt, insbesondere während der Interieurmontage des Fahrzeugs, ergänzt und fertig montiert werden. Dabei kann zudem, wie dies auch gemäß einer weiteren Ausführungsform der Erfindung vorgesehen ist, die Übertragungseinrichtung und der Seilzug bereits im Vorfeld der Interieurmontage insbesondere Unterflur am Fahrzeug montiert werden, während das Hebelgehäuse mit dem Wählhebel erst zu einem späteren Zeitpunkt - im Fahrzeuginnenraum - installiert wird.

Im Folgenden wird die Erfindung anhand lediglich Ausführungsbeispiele darstellender Zeichnungen näher erläutert. Dabei zeigt:
- **Fig. 1**: in isometrischer Darstellung eine Ausführungsform einer Betätigungseinrichtung gemäß der vorliegenden Erfindung;
- **Fig. 2**: in isometrischer Darstellung Hebelgehäuse und Wählhebel der Betätigungseinrichtung gemäß **Fig. 1****;**
- **Fig. 3**: in einer **Fig. 2** entsprechenden Darstellung Hebelgehäuse und Wählhebel der Betätigungseinrichtung gemäß **Fig. 1** und **2** mit angefügtem Moduladapter;
- **Fig. 4**: in isometrischer Darstellung Übertragungseinrichtung mit Seilzug der Betätigungseinrichtung gemäß **Fig. 1** bis **3****;** und
- **Fig. 5**: eine schematische Darstellung der variablen Wählhebelgeometrie bei einem Ausführungsbeispiel der erfindungsgemäßen Betätigungseinrichtung.

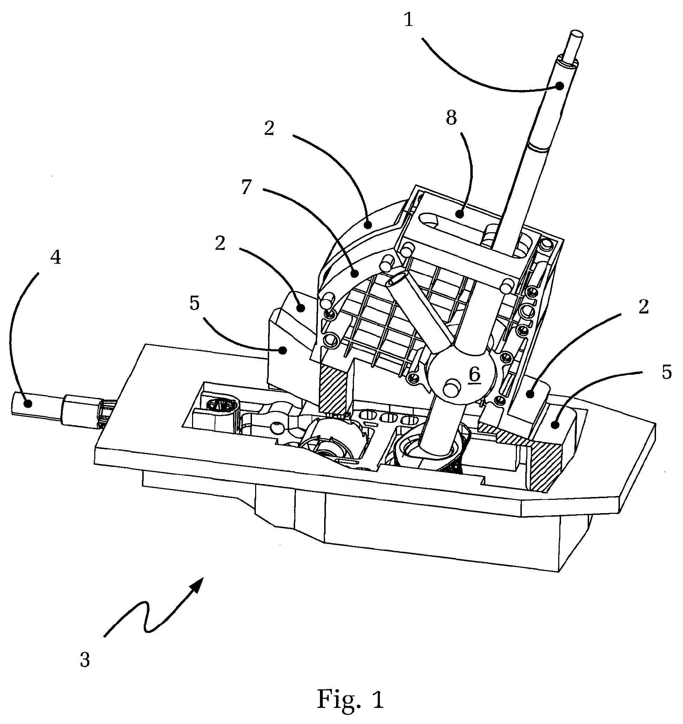

**Fig. 1** zeigt eine Ausführungsform der erfindungsgemäßen Betätigungseinrichtung. Man erkennt zunächst einen Wählhebel 1, welcher in einem Hebelgehäuse 2 angeordnet und darin mittels einer Lagerkugel 6 schwenkbar gelagert ist. Zur besseren Erkennbarkeit der Bestandteile der Betätigungseinrichtung ist das Hebelgehäuse 2 geöffnet und damit nur zur Hälfte dargestellt.

Ferner erkennbar wird in **Fig. 1** die als Modul ausgeführte Übertragungseinrichtung 3 und der an der Übertragungseinrichtung 3 entspringende Seilzug 4 zum (nicht dargestellten) Fahrzeuggetriebe. Zwischen Übertragungseinrichtung 3 und Hebelgehäuse 2 ist ein Moduladapter 5 angeordnet. Der Moduladapter 5 ist zur besseren Erkennbarkeit der weiteren Bestandteile der Betätigungseinrichtung geschnitten dargestellt, wodurch im **Fig. 1** nur die zeichnungsbezogen hintere Hälfte des Moduladapters sichtbar ist.

Der Moduladapter 5 verbindet die Übertragungseinrichtung 3 mit dem Hebelgehäuse 2. Dabei sind bei der dargestellten Ausführungsform in der Übertragungseinrichtung 3 nahezu sämtliche funktionellen Bestandteile der Betätigungseinrichtung angeordnet, insbesondere die Steuerungselektronik der Betätigungseinrichtung sowie zugehörige elektromechanische Baugruppen wie insbesondere Sperrmagnete und ggf. Aktuatoren. Somit enthält das Hebelgehäuse lediglich noch den Wählhebel, die Wählhebellagerung und ggf. einige mechanische Bestandteile, hier insbesondere eine Wählhebelrastierung 7.

Dies bedeutet zunächst einmal, dass durch Verwendung unterschiedlicher Moduladapter 5 die Relativposition und der Winkel zwischen Hebelgehäuse 2 und Übertragungseinrichtung 3 in weiten Bereichen verändert werden können. Auf diese Weise lässt sich die erfindungsgemäße Betätigungseinrichtung somit an eine nahezu unbegrenzte Vielzahl unterschiedlicher Fahrzeugtypen anpassen, jeweils unter unterschiedlichsten Einbaubedingungen und mit unterschiedlichen Anforderungen bezüglich der Position des (hier nicht dargestellten) Schaltknaufs im Fahrzeuginnenraum relativ zum Fahrersitz.

Hebelgehäuse 2 sowie die komplette Übertragungseinrichtung 3 können somit jeweils praktisch unverändert bleiben, während die Übertragungseinrichtung primär nur noch durch Auswahl des passenden Moduladapters 5 - und ggf. eines in der Länge entsprechend angepassten Wählhebels - an einen anderen oder neuen Fahrzeugtyp angepasst werden kann.

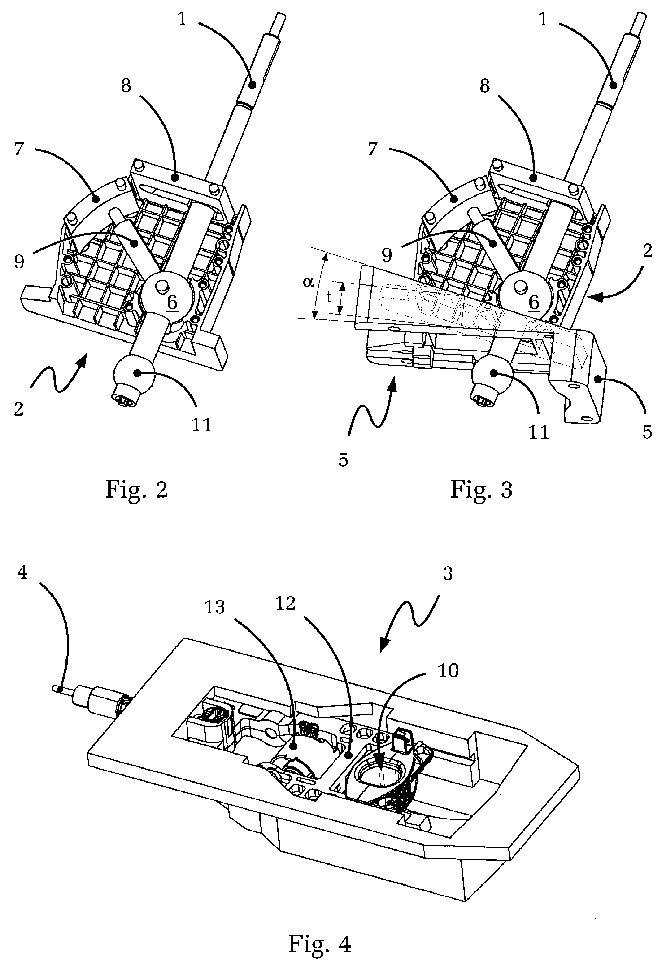

Die **Fig. 2** bis **4** zeigen die wesentlichen Baugruppen der Übertragungseinrichtung nochmals im Einzelnen. In **Fig. 2** erkennt man zunächst die hintere Hälfte des Hebelgehäuses 2 sowie den in Hebelgehäuse mittels einer Lagerung 6 gelagerten Wählhebel 1. Zusätzlich wird erkennbar, dass bei der in den **Fig.1** bis **4** dargestellten Ausführungsform der Betätigungseinrichtung auch die Wählhebelrastierung **7** ebenso wie die Wählhebelkulisse 8 als austauschbare, lediglich gesteckte Module ausgebildet sind. Durch Austausch der (hier lediglich schematisch angedeuteten) Wählhebelrastierung 7, die mit einem Rastierungsfortsatz **9** des Wählhebels in Eingriff steht, kann die Betätigungseinrichtung somit an eine unterschiedliche Anzahl von Übersetzungsstufen, an unterschiedliche Abstände zwischen den einzelnen Übersetzungsstufen ebenso wie an unterschiedliche Größen bzw. Verläufe der Rastierungskräfte angepasst werden.

Auch die hier ebenfalls als Modul ausgebildete Wählhebelkulisse 8 kann - je nach Anforderung bezüglich der Anzahl von Schaltgassen bzw. Wählhebelstellungen - mit geringem Aufwand in unterschiedlichen Varianten bereitgestellt, und die Betätigungseinrichtung durch Auswahl eines passenden Kulissenmoduls 8 dementsprechend angepasst werden.

**Fig. 3** zeigt nochmals die Anordnung aus Hebelgehäuse 2, Wählhebel 1 sowie Rastierungsmodul 7 und Kulissenmodul 8, mit zusätzlich am Hebelgehäuse 2 angeordnetem Moduladapter 5. Es wird erkennbar, dass sich Moduladapter 5 mit prinzipiell unterschiedlichstem Adapterwinkel α und unterschiedlichster Adapterdicke t bereitstellen und zur Zusammenstellung von Betätigungseinrichtungen verwenden lassen, wodurch unterschiedlichste Relativpositionen und -Winkel (und damit Ergonomiepunkte) zwischen Wählhebel 1 und Übertragungseinrichtung realisiert werden können. Auf diese Weise ergibt sich mit minimalem Teileaufwand die gewünschte Anpassbarkeit der Betätigungseinrichtung an verschiedenste Fahrzeugtypen bzw. maßliche Anforderungen des Innenraumpackage.

**Fig. 4** zeigt die Übertragungseinrichtung 3 (vgl. auch **Fig. 1**) der Betätigungseinrichtung nochmals separat. In der Übertragungseinrichtung 3 erkennt man zunächst eine Kalottenaufnahme 10 für die Übertragungskalotte 11 des Wählhebels (s. **Fig. 2** bzw. **3**), wobei durch Eingriff der Übertragungskalotte 11 in die Aufnahme 10 die Kraftübertragung zwischen Wählhebel 1 und Übertragungseinrichtung 3 erfolgt.

Von der Kalottenaufnahme 10 wird die Betätigungskraft des Wählhebels 1 auf eine Schlitteneinrichtung 12 übertragen, welche wiederum mit dem Seilzug 4 verbunden ist. Auf diese Weise kann insbesondere die mechanische Betätigung der Parksperrenentriegelung erfolgen. Die Übertragungseinrichtung 3 enthält ferner die gesamte Sensorik und Elektronik der Betätigungseinrichtung (nicht dargestellt) sowie ggf. elektromagnetische Sperren 13 oder motorische Aktuatoren zur Sperrung bzw. für andere Funktionen der Betätigungseinrichtung, wie beispielsweise Force Feedback. Dies bedeutet vor allem, dass die Übertragungseinrichtung 3 auch unabhängig vom Hebelgehäuse 2 und vom eigentlichen Wählhebel 1 - einschließlich Seilzug 4 und komplettem elektrischen Anschluss der Sensorik bzw. Wählhebelelektronik - im Fahrzeug montiert werden kann, während Hebelgehäuse 2 und Wählhebel 1 erst zu einem späteren Zeitpunkt mittels des Moduladapters 5 im Fahrzeug montiert werden können.

Insbesondere kann die Übertragungseinrichtung 3 auf diese Weise im Fahrzeug auch Unterflur - also beispielsweise unter dem Fahrzeugboden - montiert werden. Dabei kann die Übertragungseinrichtung 3 gleichzeitig bereits mittels des Seilzugs 4 mit dem Getriebe verbunden wie auch elektrisch komplett fertig verkabelt werden. Hebelgehäuse 2, Wählhebel 1 und Moduladapter 5 hingegen werden erst bei der Interieurmontage im Innenraum des Fahrzeugs montiert und dabei mit der Übertragungseinrichtung 3 verbunden. Auf diese Weise wird ein besonders flexibler und an diverse Fahrzeugtypen adaptierbarer Montageablauf für die erfindungsgemäße Betätigungseinrichtung ermöglicht.

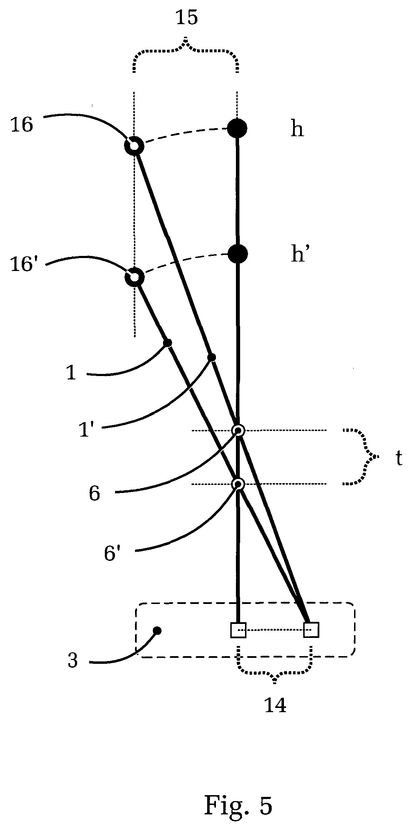

Fig. 5 zeigt in schematischer Weise die geometrischen Zusammenhänge zwischen dem Seilzugweg 14, dem Weg 15 des Schaltknaufs 16 und der vertikalen Lage der Wählhebellagerung 6, bzw. der Dickenabmessung t und des Adapterwinkels α (vgl. Fig. 3) des Moduladapters 5. Man erkennt, dass sich bei geeigneter Wahl der Dickenabmessung t und/oder des Adapterwinkels α des Moduladapters 5 und einer entsprechenden Länge des Wählhebels 1 (bzw. 1') trotz somit veränderter Höhe h des Schaltknaufs bzw. Ergonomiepunkts 16 ein unveränderter Schaltweg 15 des Schaltknaufs 16 - bei ebenso unverändertem Seilzugweg 14 - ergibt.

Auf diese Weise lassen sich mit anderen Worten - bei unveränderter Übertragungseinrichtung 3 - unterschiedlichste Ergonomiepunkte 16 bzw. insbesondere Höhenpositionen h, h' für den Schaltknauf 16 im Fahrzeuginnenraum erreichen, ohne dass konstruktive Änderungen an den sonstigen Baugruppen der Betätigungseinrichtung erforderlich wären, insbesondere nicht an der Übertragungseinrichtung 3 und am Hebelgehäuse 2.

Im Ergebnis wird somit deutlich, dass mit der Erfindung eine Betätigungseinrichtung insbesondere für Fahrzeuggetriebe geschaffen wird, die ohne nennenswerte konstruktive Änderungen zum Einbau in eine Vielzahl von Fahrzeugtypen geeignet ist. Dabei wird auf konstruktiv einfache Weise das Problem der ergonomisch korrekten Positionierung des Schaltknaufs in unterschiedlichen Fahrzeugtypen ebenso gelöst wie die Anforderungen einer möglichst flexiblen Montage und variierenden Montagereihenfolge beim Einbau der Betätigungseinrichtung in das Fahrzeug.

Die Erfindung leistet damit einen wichtigen Beitrag im Hinblick auf die Bereitstellung modular aufgebauter Betätigungseinrichtungen, mit Potenzial zu erheblichen konstruktiven Vereinfachungen und Kostenersparnissen in Konstruktion, Produktion und Montage von Betätigungseinrichtungen für Fahrzeuggetriebe.

### Bezugszeichenliste

- 1: Wählhebel
- 2: Hebelgehäuse
- 3: Übertragungseinrichtung
- 4: Seilzug
- 5: Moduladapter
- 6: Wählhebellagerung
- 7: Wählhebelrastierung, Rastierungsmodul
- 8: Schaltkulisse, Kulissenmodul
- 9: Rastierungsfortsatz
- 10: Kalottenaufnahme
- 11: Übertragungskalotte
- 12: Schlitteneinrichtung
- 13: Aktuator
- 14: Seilzugweg
- 15: Schaltweg
- 16: Schaltknauf, Ergonomiepunkt
- α: Adapterwinkel
- h: Schaltknauf-Höhenposition
- t: Adapterdicke

## Patentansprüche

1. Betätigungseinrichtung zur Auswahl von Schaltstufen eines Gangwechselgetriebes, die Betätigungseinrichtung umfassend ein Hebelgehäuse (2), einen entlang zumindest einer Schaltgasse und zwischen zumindest zwei Schaltpositionen um eine in dem Hebelgehäuse (2) festgelegte Wählhebellagerung (6) schwenkbaren Wählhebel (1) mit einem Schaltknauf zur Betätigung des Wählhebels (1), eine Übertragungseinrichtung (3) zur Übertragung von Schaltbefehlen an das Gangwechselgetriebe, und ein Adapter (5) zur Anpassung der Betätigungseinrichtung derart, dass eine einen Ergonomiepunkt (16) der Betätigungseinrichtung definierende Position des Schaltknaufs in vertikaler und/oder horizontaler Richtung veränderbar ist,
**dadurch gekennzeichnet, dass**
der Adapter (5) zwischen dem Hebelgehäuse (2) und der Übertragungseinrichtung (3) angeordnet ist, wobei der Adapter (5) keilförmig mit einer vorbestimmten Winkelgröße (α) zwischen den Anschlussflächen des Adapters (5) zum Hebelgehäuse (2) und zur Übertragungseinrichtung (3) zur Anpassung des Ergonomiepunkts (16) in der horizontalen und/oder vertikalen Richtung bereitgestellt ist.

2. Betätigungseinrichtung nach Anspruch 1,
**dadurch gekennzeichnet,**
**dass** der Adapter (5) mit vorbestimmter Dicken- bzw. Höhenabmessung (t) zur Anpassung des Ergonomiepunkts (16) in der vertikalen Richtung bereitgestellt ist.

3. Betätigungseinrichtung nach Anspruch 1 oder 2,
**dadurch gekennzeichnet,**
**dass** der Adapter (5) an das Hebelgehäuse (2) oder an die Übertragungseinrichtung (3) einstückig angeformt ist.

4. Betätigungseinrichtung nach einem der Ansprüche 1 bis 3,
**gekennzeichnet durch**
einen Wählhebel (1), welcher zur Anpassung der Betätigungseinrichtung an unterschiedliche Adapter (5), austauschbar ist.

5. Betätigungseinrichtung nach einem der Ansprüche 1 bis 4,
**gekennzeichnet durch**
einen Rastierungseinsatz (7), welcher zur Anpassung der Betätigungseinrichtung an unterschiedliche Wählhebelrastierungen, austauschbar ist.

6. Betätigungseinrichtung nach einem der Ansprüche 1 bis 5,
**gekennzeichnet durch**
eine Schaltkulisse (8), welcher zur Anpassung der Betätigungseinrichtung an unterschiedliche Schaltschemata, austauschbar ist.

7. Betätigungseinrichtung nach einem der Ansprüche 1 bis 6,
**dadurch gekennzeichnet,**
**dass** die Übertragungseinrichtung (3) eine Schlitteneinrichtung (12) umfasst.

8. Betätigungseinrichtung nach einem der Ansprüche 1 bis 7,
**dadurch gekennzeichnet,**
**dass** die Übertragungseinrichtung (3) die Schaltelektronik und/oder Schaltelektromechanik (13) der Betätigungseinrichtung umfasst.

9. Betätigungseinrichtung nach einem der Ansprüche 1 bis 8,
**dadurch gekennzeichnet,**
**dass** die Übertragungseinrichtung (3) unabhängig von Hebelgehäuse (2) und Adapter (5) in einem Fahrzeug Unterflur anordenbar ist.

## Claims

1. Actuating device for selecting gear stages of a change-speed gearbox, the actuating device comprising a lever housing (2), a selector lever (1) which can be pivoted along at least one gearshift lane and between at least two gearshift positions about a selector lever bearing arrangement (6) which is fixed in the lever housing (2), which selector lever has a gearshift grip for the actuation of the selector lever (1), a transmission device (3) for transmitting gearshift commands to the change-speed gearbox, and an adapter (5) for adaptation of the actuating device such that a position, which defines an ergonomic point (16) of the actuating device, of the gearshift grip in a vertical and/or horizontal direction can be varied,
**characterized in that**
the adapter (5) is arranged between the lever housing (2) and the transmission device (3), wherein the adapter (5), in wedge-shaped form with a predetermined angle (α) between the attachment surfaces of the adapter (5) to the lever housing (2) and to the transmission device (3), is provided for adaptation of the ergonomic point (16) in the horizontal and/or vertical direction.

2. Actuating device according to Claim 1,
**characterized**
**in that** the adapter (5) is provided with a predetermined thickness or height dimension (t) for adaptation of the ergonomic point (16) in the vertical direction.

3. Actuating device according to Claim 1 or 2,
**characterized**
**in that** the adapter (5) is formed integrally on the lever housing (2) or on the transmission device (3).

4. Actuating device according to one of Claims 1 to 3,
**characterized by**
a selector lever (1) which is exchangeable for adaptation of the actuating device to different adapters (5).

5. Actuating device according to one of Claims 1 to 4,
**characterized by**
a detent-action insert (7) which is exchangeable for adaptation of the actuating device to different selector lever detent-action configurations.

6. Actuating device according to one of Claims 1 to 5,
**characterized by**
a gearshift guide slot (8) which is exchangeable for adaptation of the actuating device to different gearshift layouts.

7. Actuating device according to one of Claims 1 to 6,
**characterized**
**in that** the transmission device (3) comprises a carriage device (12).

8. Actuating device according to one of Claims 1 to 7,
**characterized**
**in that** the transmission device (3) comprises the gearshift electronics and/or gearshift electromechanics (13) of the actuating device.

9. Actuating device according to one of Claims 1 to 8,
**characterized in that** the transmission device (3) can be arranged in an underfloor region in a vehicle independently of the lever housing (2) and adapter (5).

## Revendications

1. Dispositif d'actionnement pour la sélection de rapports d'une boîte de changement de vitesse, le dispositif d'actionnement comprenant un boîtier de levier (2), un levier de sélection (1) pouvant pivoter le long d'au moins une fente de changement de vitesse et entre au moins deux positions de changement de vitesse autour d'un palier de levier de sélection (6) fixé dans le boîtier de levier (2) avec un bouton de changement de vitesse pour l'actionnement du levier de sélection (1), un dispositif de transmission (3) pour la transmission d'ordres de changement de vitesse à la boîte de changement de vitesse, et un adaptateur (5) pour l'adaptation du dispositif d'actionnement de telle manière qu'une position du bouton de changement de vitesse définissant un point ergonomique (16) du dispositif d'actionnement puisse être modifiée en direction verticale et/ou horizontale, **caractérisé en ce que** l'adaptateur (5) est disposé entre le boîtier de levier (2) et le dispositif de transmission (3), dans lequel l'adaptateur (5) est préparé en forme de coin avec une valeur d'angle (α) prédéterminée entre les faces de raccordement de l'adaptateur (5) avec le boîtier de levier (2) et avec le dispositif de transmission (3) en vue de l'adaptation du point ergonomique (16) dans la direction horizontale et/ou verticale.

2. Dispositif d'actionnement selon la revendication 1, **caractérisé en ce que** l'adaptateur (5) est préparé avec une dimension d'épaisseur ou de hauteur (t) prédéterminée en vue de l'adaptation du point ergonomique (16) dans la direction verticale.

3. Dispositif d'actionnement selon la revendication 1 ou 2, **caractérisé en ce que** l'adaptateur (5) est formé d'un seul tenant sur le boîtier de levier (2) ou sur le dispositif de transmission (3).

4. Dispositif d'actionnement selon l'une quelconque des revendications 1 à 3, **caractérisé par** un levier de sélection (1), qui peut être échangé en vue de l'adaptation du dispositif d'actionnement à différents adaptateurs (5).

5. Dispositif d'actionnement selon l'une quelconque des revendications 1 à 4, **caractérisé par** une pièce d'immobilisation (7), qui peut être échangée en vue de l'adaptation du dispositif d'actionnement à différentes immobilisations du levier de sélection.

6. Dispositif d'actionnement selon l'une quelconque des revendications 1 à 5, **caractérisé par** une grille de guidage (8), qui peut être échangée en vue de l'adaptation du dispositif d'actionnement à différents schémas de changement de vitesse.

7. Dispositif d'actionnement selon l'une quelconque des revendications 1 à 6, **caractérisé en ce que** le dispositif de transmission (3) est un dispositif à chariot coulissant (12).

8. Dispositif d'actionnement selon l'une quelconque des revendications 1 à 7, **caractérisé en ce que** le dispositif de transmission (3) comprend l'électronique de changement de vitesse et/ou l'électromécanique de changement de vitesse (13) du dispositif d'actionnement.

9. Dispositif d'actionnement selon l'une quelconque des revendications 1 à 8, **caractérisé en ce que** le dispositif de transmission (3) peut être disposé dans un plancher de véhicule indépendamment du boîtier de levier (2) et de l'adaptateur (5).
